# EUROPEAN PATENT SPECIFICATION

(11) **EP 3 361 800 B1**
(45) Date of publication and mention of the grant of the patent: **29.06.2022**
(21) Application number: 16853796.7
(22) Date of filing: 20.05.2016
(51) Int. Cl.: H04W 72/04, H04W 24/10, H04W 88/08, H04B 7/06, H04J 99/00

(54) **BASE STATION DEVICE AND TERMINAL, AND METHOD FOR ALLOCATING WIRELESS CHANNEL**
BASISSTATIONSVORRICHTUNG UND ENDGERÄT SOWIE VERFAHREN ZUR ZUWEISUNG EINES DRAHTLOSEN KANALS
DISPOSITIF DE STATION DE BASE ET TERMINAL, ET PROCÉDÉ D'ATTRIBUTION DE CANAL SANS FIL

(30) Priority: 05.10.2015 KR 20150139964
(43) Date of publication of application: 15.08.2018
(73) Proprietor: SK Telecom Co., Ltd, Seoul 04539 (KR)
(72) Inventor: NA, Min Soo, Seoul 04539 (KR); CHOI, Chang Soon, Seoul 04539 (KR)
(74) Representative: Isarpatent
(86) International application number: PCT/KR2016/005363
(87) International publication number: WO 2017/061680

(56) References cited:
- US-A1- 2012 328 035
- US-A1- 2014 071 928
- US-A1- 2015 222 340
- NTT DOCOMO: "System-level evaluation results for downlink multiuser superposition schemes", 3GPP DRAFT; R1-155931 SYSTEM EVALUATION FOR NOMA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmö, Sweden; 20151005 - 20151009 4 October 2015 (2015-10-04), XP051002713, Retrieved from the Internet: URL:http://www.3gpp.org/ftp/Meetings_3GPP_ SYNC/RAN1/Docs/ [retrieved on 2015-10-04]
- NOKIA NETWORKS: "Further system performance of MUST", 3GPP DRAFT; R1-155890, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmö, Sweden; 20151005 - 20151009 25 September 2015 (2015-09-25), XP051021349, Retrieved from the Internet: URL:http://www.3gpp.org/ftp/tsg_ran/WG1_RL 1/TSGR1_82b/Docs/ [retrieved on 2015-09-25]
- NTT DOCOMO: 'System-level Evaluation Results for Downlink Multiuser Superposition Schemes' R1-155931, 3GPP TSG RAN WG1 MEETING #82BIS 26 September 2015, MALMO, SWEDEN, XP051002713
- FUJITSU: 'Discussion on CSI Enhancement for MUST Schemes' R1-155159, 3GPP TSG RAN WG1 MEETING #82BIS 25 September 2015, MALMO, SWEDEN, XP051002138
- INTEL CORPORATION: 'CSI Enhancement to Support Multi-user Superposition Transmission' R1-155326, 3GPP TSG RAN WG1 MEETING #82BIS 26 September 2015, MALMO, SWEDEN, XP051002262
- 3gpp: "Evolved Universal T Physic (3GPP TS 36.2 TECHNICAL SPECIFICATION 136 213 V12.6.0 (2015 LTE; l Terrestrial Radio Access (Esical layer procedures .213 version 12.6.0 Release 12 ION 15-09) -UTRA); 12)", 3GPP TS 136.213 v12.6.0, 1 January 2015 (2015-01-01), XP055367281, Retrieved from the Internet: URL:http://www.etsi.org/deliver/etsi_ts/13 6200_136299/136213/12.06.00_60/ts_136213v1 20600p.pdf [retrieved on 2017-04-25]
- "3rd Generation Partnership Project; Technical Specification Group Radio Access Network; Evolved Universal Terrestrial Radio Access (E-UTRA); User Equipment (UE) conformance specification Radio transmission and reception Part 1: Conformance Testing; (Release 12)", 3GPP STANDARD; 3GPP TS 36.521-1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG5, no. V12.6.0, 18 July 2015 (2015-07-18), pages 1377-1724, XP050965677,

## Description

### BACKGROUND OF THE INVENTION

### 1. Field of the invention

The present disclosure relates to a method of increasing the number of terminal to which the same wireless channel can be allocated by determining the number of channel state information, which is transmitted from the terminal to a base station, to be two or more under a wireless environment where the same wireless channel (frequency and time resources) is overlappingly allocated in the cell.

### 2. Description of the Prior Art

The document NTT DOCOMO, "System-level Evaluation Results for Downlink Multiuser Superposition Schemes", R1-155931, 3GPP TSG RAN WG1 Meeting #82bis, Malmo, Sweden, 26.09.2015 relates to results of a system level evaluation for downlink multiuser superposition schemes.

The document NOKIA NETWORKS: "Further system performance of MUST", R1-155890, 3GPP TSG RAN WG1 Meeting #82bis, Malmö, Sweden, 25.09.2015 presents MUST system performance results.

The document FUJITSU, "Discussion on CSI Enhancement for MUST Schemes", R1-155159, 3GPP TSG RAN WG1 Meeting #82bis, Malmo, Sweden, 25.09.2015 discusses the system performance of multiuser superposition schemes.

As the types of communication services and the required transmission speeds are become more various in an LTE communication system, expansion of LTE frequencies and evolution toward a 5G communication system is being rapidly made.

With the development of communication system, it has been required to increase the frequency capacitance in a cell. To this end, several forms of non-orthogonal multiple access technologies such as non-orthogonal multiple access (NOMA) is considered.

Non-orthogonal multiple access technology is to simultaneously transmitdata to two or more terminals at the same time, frequency, and space resources.

Non-orthogonal multiple access technology overlappingly allocates the same wireless channel (frequency and time resources) to two or more terminals, so it is expected to improve the efficiency of a frequency, as compared with a technology that allocates different wireless channels (frequency resources) to each terminal.

In order to increase the frequency capacity in the 5G communication system, it is required to increase the number of terminal to which same wireless resource can be overlappingly allocated for non-orthogonal multiple access techniques.

### SUMMARY OF THE INVENTION

The present disclosure has been made in consideration of this situation and an aspect of the present disclosure is to increase the number of terminals to which
the same wireless channel can be allocated by determining the number of channel state information, that is transmitted from the terminal to a base station, to be two or more under a wireless environment in which the same wireless channel can be overlappingly allocated in the same cell.

In accordance with an aspect of the present disclosure, there is provided a base station according to one of claim 1 or 2. The present invention also relates to a communication system according to claim 3 and a method according to one of claim 4 or 5.

Specifically, the number of the terminal group or the number of grouped terminal may be increased as compared with the case where the number of channel state information is one, when terminal group is generated by grouping terminal having the same precoding matrix index, PMI, and the same channel quality indicator, CQI on the basis of the two or more channel state information.

Therefore, according to the base station device, the terminal, and the method for allocating a wireless channel according to embodiments of the present disclosure, it is possible to increase the number of terminals to which the same wireless channel can be allocated by determining the number of channel state information, that is transmitted from the terminal to a base station, to be two or more under a wireless environment where the same wireless channel (frequency and time resources) is overlappingly allocated in the cell. Therefore, it is possible to improve wireless efficiency and cell capacitance.

### BRIEF DESCRIPTION OF THE DRAWINGS

FIG. 1 is an exemplary diagram showing a wireless environment according to a non-claimed embodiment of the present disclosure;
FIG. 2 is a diagram illustrating frequency resource allocation according to non-orthogonal multiple access;
FIG. 3 is a diagram illustrating the configuration of a base station device according to an embodiment of the present disclosure;
FIG. 4 is a diagram illustrating transmission power allocation according to an embodiment of the present disclosure;
FIG. 5 is a diagram illustrating the configuration of a terminal according to a non-claimed embodiment of the present disclosure;
FIG. 6 is a diagram illustrating operation flow in a wireless channel allocation system according to an embodiment of the present disclosure;
FIG. 7 is a diagram illustrating operation flow in a base station device according to an embodiment of the present disclosure; and
FIG. 8 is a diagram illustrating operation flow in a terminal according to a non-claimed embodiment of the present disclosure.

### DETAILED DESCRIPTION OF THE EXEMPLARY EMBODIMENTS

Hereinafter, embodiments of the present disclosure will be described with reference to accompanying drawings.

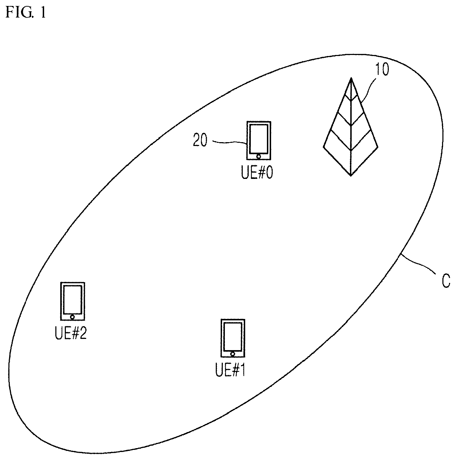

FIG. 1 shows a wireless environment according to an embodiment of the present disclosure. Said embodiment is not claimed per se, but is useful for understanding the invention.

As shown in FIG. 1, the wireless environment according to said embodiment of the present disclosure may include a base station device 10 and a plurality of terminals 20 (UE#0, UE#1, UE#2) located in a cell C.

The base station device 10 may generate the cell C and provide a mobile communication service to the terminals 20 (UE#0, UE#1, UE#2) located in the cell C. For example, the base station device 10 may be a NodeB or an eNodeB.

In order to maximize the frequency capacitance in the cell C, the base station device 10 may be implemented based on a close loop-multi input multi output (CS-MIMO) system.

Further, the terminals 20 (UE#0, UE#1, UE#2) may be mobile or fixed user nodes such as user equipment (UE) or a mobile station (MS).

The wireless environment according to said embodiment of the present disclosure follows several forms of non-orthogonal multiple access technology such as a non-orthogonal multiple access (NOMA) in order to increase the frequency capacitance in the cell.

As described above, the non-orthogonal multiple access technology is to simultaneously transmit data to two or more terminals at the same time, frequency, and space resources.

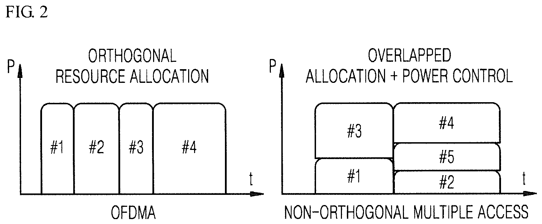

In FIG. 2, the methods of allocating frequency resources by orthogonal frequency division multiplexing access (OFDMA) and non-orthogonal multiple access are illustrated. The methods described below with reference to FIG. 2 are not claimed, but are useful for understanding the invention.

As shown in FIG. 2, it can be seen that OFDMA allocates different frequency resources to terminals in a cell while maintaining the orthogonal feature of frequency resources. To the contrary, non-orthogonal multiple access overlappingly allocates the same frequency resource to two or more terminals. In this case, the orthogonal feature of frequency resources is not maintained.

According to non-orthogonal multiple access, the frequency efficiency is improved as compared with OFDMA that allocates different frequency resources to terminals since non-orthogonal multiple access overlappingly allocates the same frequency resource to two or more terminals. Thus, it is possible to increase the frequency capacitance in a cell according to non-orthogonal multiple access.

Non-orthogonal multiple access is described in detail hereafter. When the wireless environment according to the non-claimed embodiment of FIG. 1 of the present disclosure follows non-orthogonal multiple access, the terminals 20 (UE#0, UE#1, UE#2) in the cell C periodically transmit channel state information (CSI) to the base station device 10. The channel state information is information needed for scheduling wireless channels (frequency and time resources).

The channel state information is related to the result of measuring the qualities of several wireless channels by the terminals 20 (UE#0, UE#1, UE#2) in the cell C. For example, a precoding matrix index (PMI), a channel quality indicator (CQI), and a rank indicator (RI) may be included in the channel state information.

Based on the channel state information for the terminals 20 (UE#0, UE#1, UE#2) in the cell C, the base station device 10 generates terminal group by grouping terminals with same precoding matrix index and same channel quality indicator. Then, the same frequency resource is overlappingly allocated to the grouped terminals and data is simultaneously transmitted.

The terminals 20 (UE#0, UE#1, UE#2) in the cell C may generate and transmit only one channel state information related to a specific wireless channel to the base station device 10. The specific wireless channel may have the highest quality of the wireless channels in the cell C

The base station device 10 receives the channel state information from each of the terminals 20 (UE#0, UE#1, UE#2) in the cell C and checks whether a precoding matrix index and a channel quality indicator of one terminal is same as a precoding matrix index and a channel quality indicator of the other terminal. The base station device 10 may group terminals with same precoding matrix index and same channel quality indicator into one group and allocates the same wireless channel (frequency and time resources) to the terminals in the one group.

Since the base state device 10 generates terminal groups using only one channel state information received from each of the terminals 20 (UE#0, UE#1, UE#2) in the cell C, the number of the terminals grouped into terminal group can be limited.

Accordingly, there is a limit in satisfying the frequency capacitance required for the future 5G communication system when the existing non-orthogonal multiple access is applied without modification.

Accordingly, a claimed embodiment of the present disclosure corresponding to claim 4 is intended to propose a method for grouping more terminals into a terminal group as compared with a case using only one channel state information for each terminal when non-orthogonal multiple access technology is applied. To this end, said embodiment of the present disclosure determines that each of the terminals 20 (UE#0, UE#1, UE#2) in the cell C can transmit two or more channel state information

The configurations of a wireless channel allocation system, a base station device 10, and terminals 20 (UE#0, UE#1, UE#2) for accomplishing the method are described hereafter.

First, a wireless channel allocation system according to an embodiment of the present disclosure corresponding to claim 3 is described hereafter. The configuration of the wireless channel allocation system according to said embodiment of the present disclosure may have the same as the configuration of a wireless environment according to the non-claimed embodiment of the present disclosure described above with reference to FIG. 1.

A base station device 10 performs a function of determining the number of channel state information.

Specifically, the base station device 10 determines the number of channel state information received from each of terminals 20 (UE#0, UE#1, UE#2) in the cell C. The channel state information may be used for scheduling wireless channels (frequency and time resources).

The base station device 10 determines the number of channel state information as two or more when the non-orthogonal multiple access is applied.

The number of channel state information is related to the number of terminals to which the same wireless channel (frequency and time resources) is allocated in the cell C. The number of channel state information is determined as 2 or a larger number in consideration of interference among terminals to which the same wireless channel (frequency and time resources) is applied or depending on the setting by a system operator.

Further, the base station device 10 performs a function of transmitting the number of channel state information.

Specifically, when the number of channel state information received from each of the terminals 20 (UE#0, UE#1, UE#2) in the cell C is determined, the base station device 10 transmits the determined number of channel state information to the terminals 20 (UE#0, UE#1, UE#2) in the cell C.

When the terminals 20 (UE#0, UE#1, UE#2) are initially connected to the cell C, the base station device 10 can transmit information about the determined number of channel state information to the terminals 20 (UE#0, UE#1, UE#2) in the cell C through a radio resource control (RRC) message.

The terminals 20 (UE#0, UE#1, UE#2) in the cell C perform a function of generating channel state information.

Specifically, when the terminals 20 (UE#0, UE#1, UE#2) in the cell C recognize the number of channel state information from the base station device 10 through initial connection to the cell C, each of the terminals 20 (UE#0, UE#1, UE#2) generates two or more channel state information corresponding to the recognized number of channel state information.

The terminals 20 (UE#0, UE#1, UE#2) in the cell C measure the qualities of a plurality of wireless channels in the cell and select two or more wireless channels based on the number of channel state information determined by the base station device 10 in descending order of quality. Then, the terminals 20 (UE#0, UE#1, UE#2) generate two or more channel state information related to the selected two or more wireless channels.

The channel state information includes a precoding matrix index (PMI) related to a specific precoding matrix used for measuring the quality by the terminals 20 (UE#0, UE#1, UE#2) and a channel quality indicator (CQI) related to the measured quality. The channel state information may include a rank indicator (RI).

Further, the terminals 20 (UE#0, UE#1, UE#2) in the cell C perform a function of transmitting channel state information.

Specifically, after two or more channel state information is generated in accordance with the number of channel state information determined by the base station device 10, the terminals 20 (UE#0, UE#1, UE#2) in the cell C transmit the generated two or more channel state information to the base station device 10. The two or more channel state information can be used for scheduling.

For example, the terminals 20 (UE#0, UE#1, UE#2) in the cell C can transmit two or more channel state information to the base station device 10 through a physical uplink control channel (PUCCH) or a physical uplink shared channel (PUSCH).

Further, the base station device 10 performs a function of generating terminal groups.

Specifically, when two or more channel state information is received from each of the terminals 20 (UE#0, UE#1, UE#2) in the cell C, the base station device 10 compares the two or more channel state information received from each of the terminals 20 (UE#0, UE#1, UE#2) and generates terminal groups by grouping terminals having the same channel state information. There are at least two terminals in a generated group of terminals.

The base station device 10 compares a precoding matrix index and a channel quality indicator of one channel state information received from the terminals 20 (UE#0, UE#1, UE#2) to these of the other channel state information. The base station device 10 groups terminals having the same precoding matrix index and the same channel quality indicator into a terminal group. For the grouped terminals, same wireless channel (frequency and time resources) is applied.

Further, the base station device 10 performs a function of allocating a wireless channel (frequency and time resources).

Specifically, after generating a terminal group by grouping terminals having the same precoding matrix index and channel quality indicator in channel state information, the base station device 10 allocates the same frequency resource to the terminal in each of the generated terminal group. Then the base station device 10 performs scheduling to be able to simultaneously transmit downlink data at the allocated frequency resource.

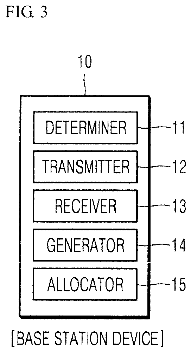

The wireless channel allocation system is described above. The configuration of the base station device 10 according to an embodiment of the present disclosure that corresponds to claim 1 is described hereafter with reference to FIG. 3.

As shown in FIG. 3, the base station device 10 according to the embodiment of the present disclosure corresponding to claim 1 includes a determiner 11 configured to determine the number of channel state information, a transmitter 12 configured to transmit the determined number of channel state information, a receiver 13 configured to receive channel state information corresponding to the determined number of channel state information, a generator 14 configured to generate terminal groups, and an allocator 15 configured to allocate a wireless channel (frequency and time resources).

All or at least a portion of the configuration of the base station device 10 including the determiner 11, transmitter, 12, receiver 13, generator 14, and allocator 15 can be implemented as a software module or a hardware module, or as a combination of a software module and a hardware module.

The base station device 10 according to the embodiment of the present disclosure corresponding to claim 1 determines the number of channel state information received from each of the terminals 20 (UE#0, UE#1, UE#2) in the cell C to be two or more when non-orthogonal multiple access is applied. In this case, the number of terminal which is grouped into a terminal group can be larger as compared with a case using one channel state information. The components of the base station device 10 are described hereafter.

The determiner 11 performs a function of determining the number of channel state information.

Specifically, the determiner 11 determines the number of channel state information. The number of channel state is received from each of the terminals 20 (UE#0, UE#1, and UE#2) in the cell C for scheduling wireless channels (frequency and time resource).

The determiner 11 determines the number of channel state information as two or more when the non-orthogonal multiple access technology is applied.

A transmitter 12 performs a function of transmitting the number of channel state information.

Specifically, when the number of channel state information that is to be received from each of the terminals 20 (UE#0, UE#1, UE#2) in the cell C is determined, the transmitter 12 transmits the determined number of channel state information to the terminals 20 (UE#0, UE#1, UE#2) in the cell C.

When the terminals 20 (UE#0, UE#1, UE#2) are initially connected to the cell C, the transmitter 12 can transmit information about the determined number of channel state information to the terminals 20 (UE#0, UE#1, UE#2) in the cell C through a radio resource control (RRC) message.

After the terminals 20 (UE#0, UE#1, UE#2) in the cell C recognize the number of channel state information from the base station device 10, the terminals 20 (UE#0, UE#1, UE#2) measure the qualities of a plurality of wireless channels in the cell and select two or more wireless channels corresponding to the number of channel state information determined by the base station device 10 in descending order of quality. Then, channel state information may be generated for each the selected two or more wireless channels, respectively.

Further, the receiver 13 performs a function of receiving two or more channel state information from each of the terminals 20 (UE#0, UE#1, UE#2) in the cell C.

Specifically, the receiver 13 receives two or more channel state information generated by each of the terminals 20 (UE#0, UE#1, UE#2) in the cell C. The number of two or more channel state information corresponds to the determined number of channel state information.

For example, the receiver 13 can receive two or more channel state information from each of the terminals 20 (UE#0, UE#1, UE#2) in the cell C through a physical uplink control channel (PUCCH) or a physical uplink shared channel (PUSCH).

The generator 14 performs a function of generating terminal group.

Specifically, when two or more channel state information is received from each of the terminals 20 (UE#0, UE#1, UE#2) in the cell C, the generator 14 compares the two or more channel state information received from each of the terminals 20 (UE#0, UE#1, UE#2) to each other. Then the generator 14 groups terminals having the same channel state information, thereby generating terminal group. There are at least two terminals in the generated group of terminals.

The generator 14 compares a precoding matrix index and a channel quality indicator of one channel state information received from the terminals 20 (UE#0, UE#1, UE#2) to these of the other channel state information. The base station device 10 groups terminals having the same the precoding matrix index and the same channel quality indicator into a terminal group. For the grouped terminals, same wireless channel (frequency and time resources) is applied.

The allocator 15 performs a function of allocating a wireless channel (frequency and time resources).

Specifically, after a terminal group is generated by grouping terminals having the same values of the precoding matrix index and channel quality indicator in channel state information, the allocator 15 allocates the same frequency resource to the terminal in the generated terminal group. Then, the allocator 15 may perform scheduling to be able to simultaneously transmit downlink data at the allocated frequency resource.

For the terminals included in the terminal group, it is guaranteed that the value of channel quality indicator using a specific precoding vector is same. Therefore that it is possible to transmit data using the same precoder.

The allocator 15 allocates transmission power for transmitting data to each of the terminals included in the terminal group to minimize interference among the terminals to which the same frequency resource is allocated.

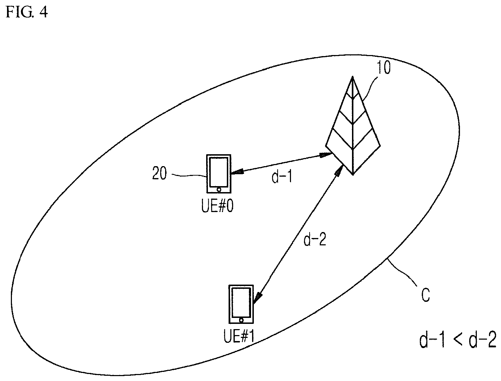

FIG. 4 shows a first terminal UE#0 and a second terminal UE#1 grouped into a terminal group.

As shown in FIG. 4, it can be seen that the distance d-1 between the first terminal UE#0 and the base station device 10 is longer than the distance d-2 between the second UE#1 and the base station device 10.

In this case, the allocator 15 allocates smaller transmission power to the first terminal UE#0 closer to the base station device 10, while it allocates larger transmission power to the second terminal UE#1 farther from the base station device 10.

Accordingly, the first terminal UE#0 closer to the base station device 10 decodes and removes an interference signal from the second terminal UE#1 having larger signal intensity and then decodes its own signal. For example, successive interference cancellation (SIC) may be applied.

On the other hand, the second terminal UE#1 farther from the base station device 10 receives a relatively weak interference signal from the first terminal UE#0. Thus the second terminal UE#1 decodes its own signal while treating the interference signal as interference.

For reference, the following Table 1 shows the transmission power that can be allocated to the first terminal UE#0 and the second terminal UE#1 in association with a specific frequency resource when the terminals are not grouped into a terminal group. In addition, the following Table 1 also shows the transmission power that can be allocated to the first terminal UE#0 and the second terminal UE#1 in association with a specific frequency resource when the terminals are grouped into a terminal group.

**[Table 1]**

| Terminal Group | Transmission power for first terminal UE#0 | Transmission power for second terminal UE#1 |
|---|---|---|
| Terminal Group (X) | 1 | 0 |
| Terminal Group (X) | 0 | 1 |
| Terminal Group (○) | 0.1 | 0.9 |
| Terminal Group (○) | 0.9 | 0.1 |
| Terminal Group (○) | 0.2 | 0.8 |
| Terminal Group (○) | 0.8 | 0.2 |

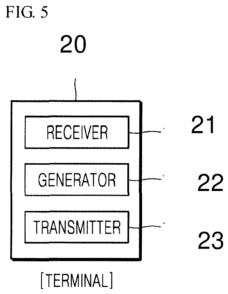

The description of the configuration of the base station device 10 according to the embodiment of the present disclosure corresponding to claim 1 is described above. The configuration of the terminal 20 (UE#0) according to a non-claimed embodiment of the present disclosure is described hereafter with reference to FIG. 5.

As shown in FIG. 5, the terminal 20 (UE#0) according to the non-claimed embodiment of the present disclosure may have a configuration including a receiver 21 configured to receive a determined number of channel state information, a generator 22 configured to generate channel state information, and a transmitter 23 configured to transmit channel state information.

All of at least a portion of the configuration of the terminal 20 (UE#0) including the receiver 21, generator 22, and transmitter 23 can be implemented as a software module or a hardware module, or as a combination of a software module and a hardware module.

The terminal 20 (UE#0) according to the non-claimed embodiment of the present disclosure with reference to FIG. 5 generates and transmits two or more channel state information to the base station device 10. In this case, it is possible to increase the possibility that the terminal 20 (UE#0) can be grouped into a terminal group together with other terminals UE#1 and UE#2, as compared with a case of transmitting one channel state information. The configuration of the terminal 20 is described in detail hereafter.

A receiver 21 performs a function of receiving the number of channel state information.

Specifically, the receiver 21 receives information of the number of channel state information, which is determined to be two or more, from the base station device 10.

In this regard, the base station 10 determines the number of channel state information for scheduling wireless channels (frequency and time resources). The channel state information is received from each of the terminals 20 (UE#0, UE#1, UE#2) in the cell C. When the terminals 20 (UE#0, UE#1, UE#2) are initially connected to the cell C, the base station device 10 transmits the information of the determined number of channel state information to the terminals 20 (UE#0, UE#1, UE#2) in the cell C through a radio resource control (RRC) message.

The generator 22 performs a function of generating channel state information.

Specifically, when the number of channel state information is identified from the base station device 10 through initial connection to the cell C, the generator 22 generates two or more channel state information based on the recognized number of channel state information.

The generator 22 measures the qualities of a plurality of wireless channels in the cell and selects two or more wireless channels corresponding to the number of channel state information determined by the base station device 10 in descending order of quality. Then, channel state information is generated for each the selected two or more wireless channels, respectively.

The channel state information may include a precoding matrix index (PMI) related to a specific precoding matrix used for measuring the quality by the terminals 20 (UE#0, UE#1, and UE#2), a channel quality indicator (CQI) related to the measured quality, and a rank indicator (RI).

A transmitter 23 performs a function of transmitting channel state information.

Specifically, when two or more channel state information are generated in accordance with the number of channel state information determined by the base station device 10, the transmitter 23 transmits the generated two or more channel state information to the base station device 10. Then the channel state information can be used for scheduling.

For example, the transmitter 23 can transmit two or more channel state information to the base station device 10 through a physical uplink control channel (PUCCH) or a physical uplink shared channel (PUSCH).

Specifically, when two or more channel state information is received from each of the terminals 20 (UE#0, UE#1, UE#2) in the cell C, the base station device 10 compares the two or more channel state information received from each of the terminals 20 (UE#0, UE#1, UE#2) to each other. Then the base station device 10 groups terminals having the same channel state information for generating terminal groups.

The base station device 10 compares a precoding matrix index and a channel quality indicator of one channel state information received from the terminals 20 (UE#0, UE#1, UE#2) to these of the other channel state information. The base station device 10 groups terminals having the same the precoding matrix index and the same channel quality indicator into a terminal group. For the grouped terminals, same wireless channel (frequency and time resources) is applied.

When a terminal group is generated by grouping terminals having the same values of the precoding matrix index and channel quality indicator in channel state information, the base station device 10 can allocate the same frequency resource to the terminals in the generated terminal group and perform scheduling to simultaneously transmit downlink data at the allocated frequency resource.

As described above, according to the wireless channel allocation system, the base station device 10, and the terminal 20 (UE#0) according to embodiments of the present disclosure, terminals with the same channel state information of the terminals 20 (UE#0, UE#1, UE#2) in the cell C are grouped into a terminal group and the same wireless channel (frequency and time resources) is overlappingly allocated to the terminals in the terminal group. It is possible to group more terminals into a terminal group, as compared with a case of one channel state information, by determining the number of channel state information that each of the terminals 20 (UE#0, UE#1, UE#2) can transmit is determined to be two or more. Therefore, the number of terminals to which the same wireless channel (frequency resource) can be allocated in the cell is increased, and it is possible to considerably improve the frequency efficiency.

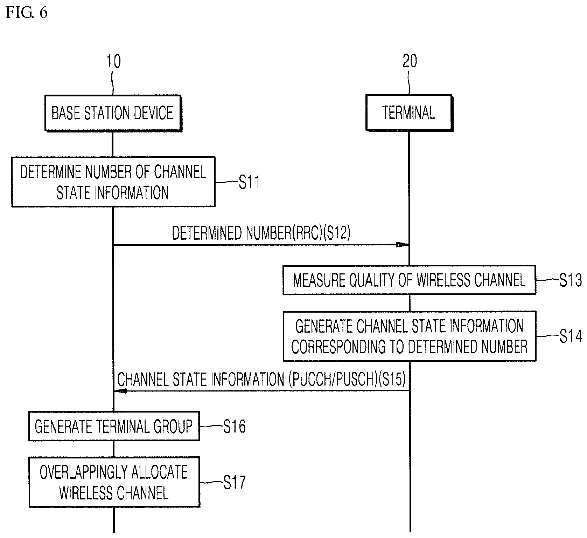

The operation flow in the wireless channel allocation system, the base station device 10, and the terminal 20 (UE#0) according to embodiments of the present disclosure is described hereafter with reference to FIGS. 6 to 8.

The operation flow of the wireless channel allocation system is described first with reference to FIG. 6.

First, the base station device 10 determines the number of channel state information in step S11. The channel state information is received from each of the terminals 20 (UE#0, UE#1, UE#2) in the cell C for scheduling wireless channels (frequency and time resources).

The base station device 10 determines the number of channel state information to be two or more when the existing non-orthogonal multiple access is applied.

Then, when the number of channel state information received from each of the terminals 20 (UE#0, UE#1, UE#2) in the cell C is determined, the base station device 10 transmits the determined number of channel state information to the terminals 20 (UE#0, UE#1, UE#2) in the cell C.

When the terminals 20 (UE#0, UE#1, UE#2) are initially connected to the cell C, the base station device 10 can transmit information about the determined number of channel state information to the terminals 20 (UE#0, UE#1, UE#2) in the cell C through a radio resource control (RRC) message.

Next, when the terminals 20 (UE#0, UE#1, UE#2) in the cell C recognize the number of channel state information from the base station device 10 through initial connection to the cell C, each of the terminals 20 (UE#0, UE#1, UE#2) generates two or more channel state information corresponding to the recognized number of channel state information in step S13 and step S14.

The terminals 20 (UE#0, UE#1, UE#2) in the cell C measure the qualities of a plurality of wireless channels in the cell and select two or more wireless channels corresponding to the number of channel state information determined by the base station device 10 in descending order of quality. Each of the terminals 20 (UE#0, UE#1, UE#2) generates channel state information for each of the selected two or more wireless channels, respectively.

The channel state information includes a precoding matrix index (PMI) related to a specific precoding matrix used for measuring the quality by the terminals 20 (UE#0, UE#1, and UE#2 and a channel quality indicator (CQI) related to the measured quality. The channel state information may also include a rank indicator (RI).

Then, after two or more channel state information is generated in accordance with the number of channel state information determined by the base station device 10, each of the terminals 20 (UE#0, UE#1, UE#2) in the cell C transmits the generated two or more channel state information to the base station device 10 in step S15. The channel state information can be used for scheduling.

For example, each of the terminals 20 (UE#0, UE#1, UE#2) in the cell C can transmit two or more channel state information to the base station device 10 through a physical uplink control channel (PUCCH) or a physical uplink shared channel (PUSCH).

Further, when two or more channel state information is received from each of the terminals 20 (UE#0, UE#1, UE#2) in the cell C, the base station device 10 compares the two or more channel state information received from the terminals 20 (UE#0, UE#1, UE#2) to each other and groups terminals having the same channel state information to generate terminal groups in step S16. There are at least two terminals in the generated group of terminals.

The base station device 10 compares a precoding matrix index and a channel quality indicator of one channel state information received from the terminals 20 (UE#0, UE#1, UE#2) to these of the other channel state information. The base station device 10 groups terminals having the same the precoding matrix index and the same channel quality indicator into a terminal group. For the grouped terminals, same wireless channel (frequency and time resources) is applied.

Thereafter, when a terminal group is generated by grouping terminals having the same values of the precoding matrix index and channel quality indicator in channel state information, the base station device 10 allocates the same frequency resource to the terminals in the generated terminal group and performs scheduling to simultaneously transmit downlink data at the allocated frequency resource in step S17. The allocating step further comprises allocating smaller transmission power to a first terminal of the generated group closer to the base station and larger transmission power to a second terminal of the generated group farther from the base station device.

The description of the operation flow of the wireless channel allocation system according to an embodiment of the present disclosure, wherein the system corresponds to claim 3, is described above.

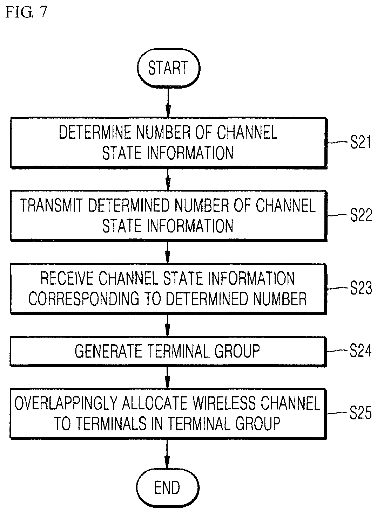

The operation flow of the base station 10 according to an embodiment of the present disclosure corresponding to claim 4 is described hereafter with reference to FIG. 7.

First, the determiner 11 determines the number of channel state information in step S21. The channel state information is received from each of the terminals 20 (UE#0, UE#1, UE#2) in the cell C for scheduling wireless channels (frequency and time resources).

The determiner 11 determines the number of channel state information to be two or more, when the non-orthogonal multiple access is applied.

Then, when the number of channel state information received from each of the terminals 20 (UE#0, UE#1, UE#2) in the cell C is determined, the transmitter 12 transmits the determined number of channel state information to the terminals 20 (UE#0, UE#1, UE#2) in the cell C in step S22.

In this process, when the terminals 20 (UE#0, UE#1, UE#2) are initially connected to the cell C, the transmitter 12 can transmit information about the determined number of channel state information to the terminals 20 (UE#0, UE#1, UE#2) in the cell C through a radio resource control (RRC) message.

After recognizing the number of channel state information from the base station device 10, the terminals 20 (UE#0, UE#1, UE#2) in the cell C measure the qualities of a plurality of wireless channels in the cell and select two or more wireless channels corresponding to the number of channel state information determined by the base station device 10 in descending order of quality. The channel state information is generated for each of the selected two or more wireless channels, respectively.

Further, the receiver 13 receives two or more channel state information generated by each of the terminals 20 (UE#0, UE#1, UE#2) in the cell C in step S23. The number of two or more channel state information corresponds to the determined number of channel state information.

For example, the receiver 13 can receive two or more channel state information from each of the terminals 20 (UE#0, UE#1, UE#2) in the cell C through a physical uplink control channel (PUCCH) or a physical uplink shared channel (PUSCH).

Next, when two or more channel state information are received from each of the terminals 20 (UE#0, UE#1, UE#2) in the cell C, the generator 14 compares the two or more channel state information received from each of the terminals 20 (UE#0, UE#1, UE#2) to each other and groups terminals having the same channel state information to generate terminal group in step S24. There are at least two terminals in the generated group of terminals.

The base station device 10 compares a precoding matrix index and a channel quality indicator of one channel state information received from the terminals 20 (UE#0, UE#1, UE#2) to these of the other channel state information. The base station device 10 groups terminals having the same precoding matrix index and the same channel quality indicator into a terminal group. For the grouped terminals, same wireless channel (frequency and time resources) is applied.

Thereafter, when a terminal group is generated by grouping terminals having the same values of the precoding matrix index and channel quality indicator in channel state information, the allocator 15 allocates the same frequency resource to the terminals in the generated terminal group and performs scheduling to simultaneously transmit downlink data at the allocated frequency resource in step S25.

The allocator 15 allocates transmission power for transmitting data to the terminals included in the terminal group to minimize interference among the terminals to which the same frequency resource is allocated. The allocating step further comprises allocating smaller transmission power to a first terminal of the generated group closer to the base station and larger transmission power to a second terminal of the generated group farther from the base station device.

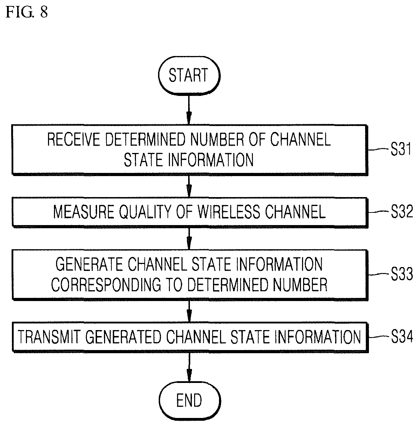

The description of the operation flow of the base station device 10 according to an embodiment of the present disclosure corresponding to claim 4 is described above. The operation of the terminal 20 (UE#0) according to a non-claimed embodiment of the present disclosure is described hereafter with reference to FIG. 8.

First, the receiver 21 receives the number of channel state information from the base station device 10 in step S31. The number of channel state information is determined to be two or more.

The base station 10 determines the number of channel state information to be two or more. The channel state information is received from each of the terminals 20 (UE#0, UE#1, UE#2) in the cell C for scheduling wireless channels (frequency and time resources). When the terminals 20 (UE#0, UE#1, UE#2) are initially connected to the cell C, the base station device 10 transmits the information of the determined number of channel state information to the terminals 20 (UE#0, UE#1, UE#2) in the cell C through a radio resource control (RRC) message.

Next, when the generator 22 recognizes the number of channel state information from the base station device 10 through initial connection to the cell C, it generates two or more channel state information based on the recognized number of channel state information in step 32 and step 33.

The generator 22 measures the qualities of a plurality of wireless channels in the cell and selects two or more wireless channels corresponding to the number of channel state information determined by the base station device 10 in descending order of quality. The channel state information is generated for each of the selected two or more wireless channels.

The channel state information may include a precoding matrix index (PMI) related to a specific precoding matrix used for measuring the quality by the terminals 20 (UE#0, UE#1, and UE#2), a channel quality indicator (CQI) related to the measured quality, and a rank indicator (RI).

Next, when two or more channel state information are generated in accordance with the number of channel state information determined by the base station device 10, the transmitter 23 transmits the generated two or more channel state information to the base station device 10, so that the channel state information can be used for scheduling in step S34.

In relation to this process, for example, the transmitter 23 can transmit two or more channel state information to the base station device 10 through a physical uplink control channel (PUCCH) or a physical uplink shared channel (PUSCH).

Specifically, when receiving two or more channel state information from each of the terminals 20 (UE#0, UE#1, UE#2) in the cell C, the base station device 10 compares the two or more channel state information received from each of the terminals 20 (UE#0, UE#1, UE#2) to each other and groups terminals having the same channel state information to generate terminal group.

The base station device 10 compares a precoding matrix index and a channel quality indicator of one channel state information received from the terminals 20 (UE#0, UE#1, UE#2) to these of the other channel state information. The base station device 10 groups terminals having the same the precoding matrix index and the same channel quality indicator into a terminal group. For the grouped terminals, same wireless channel (frequency and time resources) is applied.

As a result, when a terminal group is generated by grouping terminals having the same values of the precoding matrix index and channel quality indicator in channel state information, the base station device 10 can allocate the same frequency resource to the terminals in the generated terminal group and perform scheduling to simultaneously transmit downlink data at the allocated frequency resource.

As described above, according to the operation flow of the wireless channel allocation system, the base station device 10, and the terminal 20 (UE#0) according to embodiments of the present disclosure, terminals with the same channel state information of the terminals 20 (UE#0, UE#1, UE#2) in the cell C may be grouped into a terminal group and the same wireless channel (frequency and time resources) is overlappingly allocated to the terminals in the terminal group. It is possible to group more terminals into a terminal group, as compared with a case of one channel state information, by determining the number of channel state information that each of the terminals 20 (UE#0, UE#1, UE#2) can transmit is determined to be two or more. Therefore, the number of terminals to which the same wireless channel (frequency resource) can be allocated in the cell is increased, and it is possible to considerably improve the frequency efficiency.

Meanwhile, the method described in connection with the provided embodiments or steps of the algorithm may be implemented in a form of a program command, which can be executed through various computer means, and recorded in a computer-readable recording medium. The computer readable medium may include a program command, a data file, a data structure, and the like independently or in combination. The program command recorded in the medium may be things specially designed and configured for the present disclosure, or things that are well known to and can be used by those skilled in the computer software related art. Examples of the computer-readable recording medium include magnetic media such as hard disks, floppy disks and magnetic tapes, optical media such as a Compact Disc Read-Only Memory (CD-ROM) and a Digital Versatile Disc (DVD), magneto-optical media such as floppy disks, and hardware devices such as a Read-Only Memory (ROM), a Random Access Memory (RAM) and a flash memory, which are specially configured to store and perform program instructions. Examples of the program command include a machine language code generated by a compiler and a high-level language code executable by a computer through an interpreter and the like. The hardware device may be configured to operate as one or more software modules in order to perform operations of the present disclosure, and vice versa.

## Claims

1. A base station device (10) for applying non-orthogonal multiple access, the base station (10) comprising:
a determiner (11) configured to determine a number of channel state information, the determined number of channel state information being two or more when non-orthogonal multiple access is applied, wherein the channel state information includes a precoding matrix index, PMI, and a channel quality indicator, CQI;
a transmitter (12) configured to transmit the determined number of channel state information to a terminal in a cell;
a receiver (13) configured to receive two or more channel state information from the terminal in accordance with the transmitted number of channel state information;
a generator (14) configured to generate a terminal group by grouping terminals having the same PMI and the same CQI on the basis of the received two or more channel state information; and
an allocator (15) configured to allocate a same wireless channel to the terminals included in the terminal group,
wherein there are at least two terminals in the generated group of terminals, and
wherein the allocator (15) is further configured to allocate smaller transmission power to a first terminal of the generated group closer to the base station device and larger transmission power to a second terminal of the generated group farther from the base station device.

2. The base station device (10) of claim 1, wherein the number of channel state information is included in a radio resource control message that is transmitted to the terminal initially connected to the cell by the base station device, and
the two or more channel state information are received from the terminal through a physical uplink control channel or a physical uplink shared channel.

3. A communication system for applying non-orthogonal multiple access, the system comprising:
a base station (10) according to claim 1 or 2; and
a terminal (20) comprising:
a receiver (21) configured to receive a number of channel state information, the number of channel state information being determined to be two or more by the base station (10);
a generator (22) configured to measure the quality of a plurality of wireless channels in the cell and to select two or more wireless channels corresponding to the received number of channel state information in descending order of quality
and to generate two or more channel state information in accordance with the received number of channel state information; and
a transmitter (23) configured to transmit the generated two or more channel state information to the base station (10).

4. A method for allocating a wireless channel in a communication system applying non-orthogonal multiple access, the method comprising:
determining (S21), by a base station, a number of channel state information to be two or more, the determined number of channel state information being two or more when non-orthogonal multiple access is applied, wherein the channel state information includes a precoding matrix index, PMI, and a channel quality indicator, CQI;
transmitting (S22), by the base station, the determined number of channel state information to a terminal in a cell;
receiving (S23), by the base station, two or more channel state information from the terminal in accordance with the transmitted number of channel state information;
generating (S24), by the base station, a terminal group by grouping terminals having the same PMI and the same CQI on the basis of the received two or more channel state information; and
allocating (S25), by the base station, a same wireless channel to the terminals included in the terminal group,
wherein there are at least two terminals in the generated group of terminals, and
wherein the allocating step further comprises allocating smaller transmission power to a first terminal of the generated group closer to the base station and larger transmission power to a second terminal of the generated group farther from the base station device.

5. The method of claim 4, wherein the determined number of channel state information is included in a radio resource control message that is transmitted to the terminal initially connected to the cell by the base station device, and
the received two or more channel state information are received from the terminal through a physical uplink control channel or a physical uplink shared channel.

## Patentansprüche

1. Basisstationsvorrichtung (10) zum Anwenden eines nichtorthogonalen Mehrfachzugriffs, wobei die Basisstation (10) umfasst:
einen Bestimmer (11), der dafür ausgeführt ist, eine Anzahl von Kanalzustandsinformationen zu bestimmen, wobei die bestimmte Anzahl von Kanalzustandsinformationen zwei oder mehr ist, wenn ein nicht-orthogonaler Mehrfachzugriff angewendet wird, wobei die Kanalzustandsinformationen einen Vorcodierungsmatrixindex (PMI: Precoding Matrix Index) und einen Kanalqualitätsindikator (CQI: Channel Quality Indicator) umfassen;
einen Sender (12), der dafür ausgeführt ist, die bestimmte Anzahl von Kanalzustandsinformationen an ein Endgerät in einer Zelle zu senden;
einen Empfänger (13), der dafür ausgeführt ist, zwei oder mehr Kanalzustandsinformationen von dem Endgerät gemäß der gesendeten Anzahl von Kanalzustandsinformationen zu empfangen;
einen Generator (14), der dafür ausgeführt ist, eine Endgerätegruppe durch Gruppieren von Endgeräten, die den selben PMI und den selben CQI aufweisen, auf der Grundlage der empfangenen zwei oder mehr Kanalzustandsinformationen zu generieren; und
einen Zuordner (15), der dafür ausgeführt ist, den in der Endgerätegruppe enthaltenen Endgeräten einen selben drahtlosen Kanal zuzuordnen,
wobei es mindestens zwei Endgeräte in der generierten Gruppe von Endgeräte gibt und
wobei der Zuordner (15) des Weiteren dafür ausgeführt ist, einem ersten Endgerät der generierten Gruppe, das sich näher an der Basisstationsvorrichtung befindet, eine geringere Sendeleistung zuzuordnen und einem zweiten Endgerät der generierten Gruppe, das weiter von der Basisstationsvorrichtung entfernt ist, eine größere Sendeleistung zuzuordnen.

2. Basisstationsvorrichtung (10) nach Anspruch 1, wobei die Anzahl von Kanalzustandsinformationen in einer Funkressourcensteuerungsnachricht enthalten ist, die durch die Basisstationsvorrichtung an das anfänglich mit der Zelle verbundene Endgerät gesendet wird, und
die zwei oder mehr Kanalzustandsinformationen von dem Endgerät über einen Physical Uplink Control Channel oder einen Physical Uplink Shared Channel empfangen werden.

3. Kommunikationssystem zum Anwenden eines nicht-orthogonales Mehrfachzugriffs, wobei das System umfasst:
eine Basisstation (10) nach Anspruch 1 oder 2; und
ein Endgerät (20), das umfasst:
einen Empfänger (21), der dafür ausgeführt ist, eine Anzahl von Kanalzustandsinformationen zu empfangen, wobei die Anzahl von Kanalzustandsinformationen durch die Basisstation (10) als zwei oder mehr bestimmt wird;
einen Generator (22), der dafür ausgeführt ist, die Qualität mehrerer drahtloser Kanäle in der Zelle zu messen und zwei oder mehr drahtlose Kanäle entsprechend der empfangenen Anzahl von Kanalzustandsinformationen in absteigender Reihenfolge der Qualität auszuwählen und zwei oder mehr Kanalzustandsinformationen gemäß der empfangenen Anzahl von Kanalzustandsinformationen zu generieren; und einen Sender (23), der dafür ausgeführt ist, die generierten zwei oder mehr Kanalzustandsinformationen an die Basisstation (10) zu senden.

4. Verfahren zum Zuordnen eines drahtlosen Kanals in einem Kommunikationssystem, das einen nicht-orthogonalem Mehrfachzugriff anwendet, wobei das Verfahren umfasst:
Bestimmen (S21), durch eine Basisstation, einer Anzahl von Kanalzustandsinformationen als zwei oder mehr, wobei die bestimmte Anzahl von Kanalzustandsinformationen zwei oder mehr ist, wenn ein nicht-orthogonaler Mehrfachzugriff angewendet wird, wobei die Kanalzustandsinformationen einen Vorcodierungsmatrixindex (PMI: Precoding Matrix Index) und einen Kanalqualitätsindikator (CQI: Channel Quality Indicator) umfassen;
Senden (S22), durch die Basisstation, der bestimmten Anzahl von Kanalzustandsinformationen an ein Endgerät in einer Zelle;
Empfangen (S23), durch die Basisstation, von zwei oder mehr Kanalzustandsinformationen von dem Endgerät gemäß der gesendeten Anzahl von Kanalzustandsinformationen;
Generieren (S24), durch die Basisstation, einer Endgerätegruppe durch Gruppieren von Endgeräten, die den selben PMI und den selben CQI aufweisen, auf der Grundlage der empfangenen zwei oder mehr Kanalzustandsinformationen; und
Zuordnen (S25), durch die Basisstation, einen selben drahtlosen Kanal zu den in der Endgerätegruppe enthaltenen Endgeräten,
wobei es mindestens zwei Endgeräte in der generierten Gruppe von Endgeräte gibt und
wobei der Zuordnungsschritt des Weiteren umfasst, einem ersten Endgerät der generierten Gruppe, das sich näher an der Basisstationsvorrichtung befindet, eine geringere Sendeleistung zuzuordnen und einem zweiten Endgerät der generierten Gruppe, das weiter von der Basisstationsvorrichtung entfernt ist, eine größere Sendeleistung zuzuordnen.

5. Verfahren nach Anspruch 4, wobei die bestimmte Anzahl von Kanalzustandsinformationen in einer Funkressourcensteuerungsnachricht enthalten ist, die durch die Basisstationsvorrichtung an das anfänglich mit der Zelle verbundene Endgerät gesendet wird, und
die empfangenen zwei oder mehr Kanalzustandsinformationen von dem Endgerät über einen Physical Uplink Control Channel oder einen Physical Uplink Shared Channel empfangen werden.

## Revendications

1. Dispositif de station de base (10) permettant de mettre en œuvre l'accès multiple non orthogonal, la station de base (10) comprenant :
une unité de détermination (11) configurée pour déterminer un nombre d'informations d'état de canal, le nombre déterminé d'informations d'état de canal étant supérieur ou égal à deux lorsque l'accès multiple non orthogonal est mis en œuvre, dans lequel les informations d'état de canal comprennent un indice de matrice de précodage (PMI :
precoding matrix index), et un indicateur de qualité de canal (CQI : channel quality indicator) ;
un émetteur (12) configuré pour transmettre le nombre déterminé d'informations d'état de canal à un terminal dans une cellule ;
un récepteur (13) configuré pour recevoir au moins deux informations d'état de canal en provenance du terminal, en fonction du nombre transmis d'informations d'état de canal ;
un générateur (14) configuré pour générer un groupe de terminaux en regroupant des terminaux ayant le même indice PMI et le même indicateur CQI, sur la base des au moins deux informations d'état de canal reçues ; et
une unité d'attribution (15) configurée pour attribuer un même canal sans fil aux terminaux compris dans le groupe de terminaux,
dans lequel il existe au moins deux terminaux dans le groupe généré de terminaux, et
dans lequel l'unité d'attribution (15) est configurée en outre pour attribuer une plus faible puissance d'émission à un premier terminal du groupe généré, plus proche du dispositif de station de base et une plus forte puissance d'émission à un second terminal du groupe généré, plus éloigné du dispositif de station de base.

2. Dispositif de station de base (10) selon la revendication 1, dans lequel le nombre d'informations d'état de canal est compris dans un message de gestion des ressources radioélectriques qui est transmis au terminal initialement connecté à la cellule par le dispositif de station de base, et
les au moins deux informations d'état de canal sont reçues en provenance du terminal par le biais d'un canal physique de commande sur la liaison montante ou d'un canal physique partagé sur liaison montante.

3. Système de communication permettant de mettre en œuvre l'accès multiple non orthogonal, le système comprenant :
une station de base (10) selon la revendication 1 ou 2 ; et
un terminal (20) comprenant :
un récepteur (21) configuré pour recevoir un nombre d'informations d'état de canal, le nombre d'informations d'état de canal étant déterminé comme étant supérieur ou égal à deux par la station de base (10) ;
un générateur (22) configuré pour mesurer la qualité d'une pluralité de canaux sans fil dans la cellule et pour sélectionner au moins deux canaux sans fil correspondant au nombre reçu d'informations d'état de canal, selon un ordre décroissant de qualité et pour générer au moins deux informations d'état de canal en fonction du nombre reçu d'informations d'état de canal ; et
un émetteur (23) configuré pour transmettre les au moins deux informations d'état de canal générées à la station de base (10).

4. Procédé permettant d'attribuer un canal sans fil dans un système de communication mettant en œuvre l'accès multiple non orthogonal, le procédé comprenant les étapes suivantes :
déterminer (S21), au moyen d'une station de base, un nombre d'informations d'état de canal comme étant supérieur ou égal à deux, le nombre déterminé d'informations d'état de canal étant supérieur ou égal à deux lorsque l'accès multiple non orthogonal est mis en œuvre, dans lequel les informations d'état de canal comprennent un indice de matrice de précodage (PMI : precoding matrix index) et un indicateur de qualité de canal (CQI : channel quality indicator) ;
transmettre (S22), au moyen de la station de base, le nombre déterminé d'informations d'état de canal à un terminal dans une cellule ;
recevoir (S23), au moyen de la station de base, au moins deux informations d'état de canal en provenance du terminal, en fonction du nombre transmis d'informations d'état de canal ;
générer (S24), au moyen de la station de base, un groupe de terminaux en regroupant des terminaux ayant le même indice PMI et le même indicateur CQI, sur la base des au moins deux informations d'état de canal reçues ; et
attribuer (S25), au moyen de la station de base, un même canal sans fil aux terminaux compris dans le groupe de terminaux,
dans lequel il existe au moins deux terminaux dans le groupe généré de terminaux, et
dans lequel l'étape d'attribution comprend en outre l'attribution d'une plus faible puissance d'émission à un premier terminal du groupe généré, plus proche de la station et une plus forte puissance d'émission à un second terminal du groupe généré, plus éloigné du dispositif de station de base.

5. Procédé selon la revendication 4, dans lequel le nombre déterminé d'informations d'état de canal est compris dans un message de gestion des ressources radioélectriques qui est transmis au terminal initialement connecté à la cellule par le dispositif de station de base, et
les au moins deux informations d'état de canal reçues sont reçues en provenance du terminal par le biais d'un canal physique de commande sur la liaison montante ou d'un canal physique partagé sur liaison montante.
